# NEUE EUROPÄISCHE PATENTSCHRIFT

(11) **EP 3 310 693 B2**
(45) Veröffentlichungstag und Bekanntmachung des Hinweises auf die Entscheidung über den Einspruch: **21.12.2022**
(45) Hinweis auf die Patenterteilung: 07.08.2019
(21) Anmeldenummer: 16728312.6
(22) Anmeldetag: 09.06.2016
(51) Int. Cl.: B65D 85/804

(54) **PORTIONSKAPSEL UND VERFAHREN ZUR HERSTELLUNG EINES GETRÄNKS MIT EINER PORTIONSKAPSEL**
CAPSULE FOR PREPARATION OF BEVERAGES
CAPSULE POUR LA PRODUCTION DES BOISSONS

(30) Priorität: 16.06.2015 DE 102015109608
(43) Veröffentlichungstag der Anmeldung: 25.04.2018
(73) Patentinhaber: GCS German Capsule Solution GmbH, 51469 Bergisch Gladbach (DE)
(72) Erfinder: KRÜGER, Marc, 51467 Bergisch-Gladbach (DE); EMPL, Günter, 51429 Bergisch Gladbach (DE)
(74) Vertreter: Kutzenberger Wolff & Partner
(86) Internationale Anmeldenummer: PCT/EP2016/063215
(87) Internationale Veröffentlichungsnummer: WO 2016/202683

(56) Entgegenhaltungen:
- EP-A1- 0 224 297
- WO-A1-2012/038063
- WO-A1-2013/189555
- WO-A1-2013/189923
- WO-A1-2014/131779
- US-A1- 2001 048 957
- US-A1- 2013 059 039
- US-B1- 6 440 256

## Beschreibung

Die vorliegende Erfindung betrifft eine Portionskapsel zur Herstellung eines Getränks aufweisend einen Kapselkörper mit einem Kapselboden, einer Seitenwand und einem Kragenrand sowie einem Deckel, wobei zwischen dem Kapselboden und dem Deckel ein Hohlraum zur Aufnahme eines pulverförmigen, Granulat-förmigen oder flüssigen Getränkesubstrats ausgebildet ist und wobei in dem Hohlraum ein Filterelement angeordnet ist und das Filterelement aus nicht gewebtem Fasermaterial gefertigt ist.

Solche Portionskapseln sind aus dem Stand der Technik beispielsweise der WO 2012/038063 und der WO 2013/189923 allgemein bekannt und werden beispielsweise zur Herstellung von Tee- oder Kaffeegetränken in Brühautomaten eingesetzt. Dafür wird von einer Pumpe Wasser durch die Portionskapsel gedrückt und dabei eine Getränkesubstanz gelöst und/oder extrahiert. Die aus dem Stand der Technik bekannten Portionskapseln haben jedoch den Nachteil, dass sie, insbesondere das Filterelement, einen vergleichsweise hohen Druckverlust hat, d.h., dass der Überdruck, der von der Pumpe des Brühautomaten zur Verfügung gestellt werden muss, wesentlich größer als 2 Bar sein muss.

Es war deshalb die Aufgabe der vorliegenden Erfindung, eine Portionskapsel mit einem Filterelement zur Verfügung zu stellen, welche einen im Vergleich zum Stand der Technik geringen Druckverlust aufweist.

Gelöst wird diese Aufgabe mit einer Portionskapsel zur Herstellung eines Getränks aufweisend einen Kapselkörper mit einem Kapselboden, einer Seitenwand und einem Kragenrand sowie einem Deckel, wobei zwischen dem Kapselboden und dem Deckel ein Hohlraum zur Aufnahme eines pulverförmigen, Granulat-förmigen, Blattschnitt-förmigen und/oder flüssigen Getränkesubstrats ausgebildet ist und wobei in dem Hohlraum ein Filterelement angeordnet ist und das Filterelement aus nicht gewebtem Fasermaterial gefertigt ist, und das Filterelement einen Randbereich aufweist, der mit dem Kragenrand des Kapselkörpers verbunden ist und einen Zentralbereich aufweist, der an dem Kapselboden befestigt ist, wobei die Seitenwand des Filterelements gespannt ist.

Die zu diesem Gegenstand der vorliegenden Erfindung gemachten Ausführungen gelten für die anderen Gegenstände der vorliegenden Erfindung gleichermaßen und umgekehrt.

Im Vergleich zum Stand der Technik hat die erfindungsgemäße Portionskapsel den Vorteil, dass ein einfaches und kostengünstiges nicht gewebtes Fasermaterial als Siebelement Verwendung findet. Dieses Material ist nicht eben und die Seitenwand des Filterelements ist gespannt und das Filterelement weist folglich eine vergleichsweise große Filterfläche auf. Der Zentralbereich des Filterelements wird an dem Boden des Kapselkörpers befestigt, so dass das Filterelement eine klar definierte Position in dem Kapselkörper einnimmt. All dies resultiert in einem vergleichsweise geringen Druckverlust der Portionskapsel.

Die Portionskapsel im Sinne der vorliegenden Erfindung umfasst eine vorzugsweise hermetisch dichte Portionskapsel. Dies bedeutet, dass das in der Portionskapsel befindliche Getränke- oder Lebensmittelsubstrat, beispielsweise Kaffeepulver, Suppenpulver oder Tee, vor dem Extraktions- und/oder Lösevorgang im Wesentlichen aromadicht gegenüber der Umwelt verschlossen ist. Die Portionskapsel muss aber nicht hermetisch dicht sein, sondern kann auch, vor deren Verwendung in einer hermetisch dichten Verpackung vorgesehen sein, die dann, beispielsweise manuell geöffnet wird. Solche Portionskapseln sind in der Regel an mindestens einer, vorzugsweise zwei Seiten geöffnet, d.h. von der Zubereitungsflüssigkeit durchströmbar, ohne dass sie angestochen wird.

Die Portionskapseln zur Herstellung eines Getränkes oder eines Lebensmittels sind bevorzugt kegelstumpfförmig oder zylindrisch geformt und werden beispielsweise aus einer tiefgezogenen Kunststofffolie oder im Kunststoffspritzverfahren hergestellt. Sie haben üblicherweise einen geschlossenen Kapselboden und eine offene Einfüllseite mit einem Kragenrand, auf den, nachdem der Hohlraum der Portionskapsel mit einem Filterelement versehen und mit einem granulierten, pulverförmigen oder flüssigen Getränkesubstrat befüllt worden ist, eine Deckelfolie aufgesiegelt oder aufgeklebt wird. Im Fall von Tee kann das Getränkesubstrat auch als Blattschnitt vorliegen.

Das Filterelement wird zwischen dem Getränkesubstrat und dem Kapselboden angeordnet und weist gemäß dieser Ausführungsform der vorliegenden Erfindung einen Randbereich, insbesondere einen kreisringförmigen Randbereich, auf, der an dem Kragenrand der Portionskapsel befestigt, insbesondere gesiegelt wird. An den Randbereich schließt sich die Seitenwand des Filterelements an, die vorzugsweise zumindest abschnittsweise parallel zu der Seitenwand des Kapselkörpers verläuft. Die Seitenwand ist in einem Winkel zu dem Randbereich vorgesehen. Vorzugsweise ist die Seitenwand kegelstumpförmig oder Parabel-förmig vorgesehen. Vorzugsweise weist die Seitenwand und/oder der Randbereich Falten auf. Erfindungsgemäß ist die Seitenwand des Filterelements gespannt. Dadurch erhält das Filterelement, insbesondere dessen Wandbereich eine bestimmte Form, die sich vorteilhaft auf den Durchfluss des Wassers durch den Filter auswirkt und/oder verhindert, dass das Filterelement von einem Anstechorgan, insbesondere im Bereich des Kapselbodens durchstochen wird. An die Seitenwand des Filterelements schließt sich ein Zentralbereich an, der vorzugweise zumindest abschnittsweise parallel zu dem Boden des Kapselkörpers verläuft und/oder sich im Bereich der Rotationsachse des Filterelements befindet. Erfindungsgemäß ist der Zentralbereich mit dem Kapselboden verbunden, insbesondere stoffschlüssig, beispielweise durch Siegeln, insbesondere mit einem Ultraschallwerkzeug. Die Siegelung mit dem Kapselboden kann beispielsweise punkt- flächen- oder kreisringförmig sein Vorzugsweise beträgt der Innendurchmesser der Siegelung an dem Kapselboden 0.-32% und der Außendurchmesser 7 - 42% des freien Innendurchmessers des Kapselkörpers. Vorzugsweise wird die Seitenwand des Filterelements beim Befestigen am Kapselboden gespannt. Das Filterelement ist aus einem nicht gewebten Fasermaterial hergestellt und verhindern, dass Partikel des Getränkesubstrats in das herzustellende Getränk gelangt. Der Bereich innerhalb des jeweiligen Siegelkreises steht in der Regel für die Filtration nicht zur Verfügung.

Das Filterelement kann mehrlagig vorgesehen sein, wobei die Lagen vorzugsweise miteinander verbunden sind, beispielsweise durch kalandrieren.

Für die Herstellung der erfindungsgemäßen Portionskapsel wird beispielsweise ein Kapselkörper zur Verfügung gestellt, an dessen Kragenrand der Randbereich des Filterelements gesiegelt wird. Danach wird der Zentralbereich des Filterelementes an den Kapselboden gesigelt und anschließend das Getränkesubstrat in den Kapselkörper eingefüllt. Anschließend wird die Portionskapsel mit einer Deckelfolie verschlossen, die mit dem Randbereich des Filterelements und/oder mit dem Kragenrand des Kapselkörpers, insbesondere durch Siegeln, verbunden wird. Alternativ wird das Filterelement mit dem Kapselboden verbunden, mit der Getränkesubstanz gefüllt. Abschließend wird die Deckelfolie an den Randbereich des Filterelements gesiegelt und im Wesentlichen gleichzeitig der Randbereich des Filterelements mit dem Kragenrand der Portionskapsel verbunden. Dabei wird das Filterelement gespannt. Gegebenenfalls überstehendes Material des Filterelements kann insbesondere nachträglich entfernt werden, beispielsweise durch Stanzen.

Für die Zubereitung eines Getränks, beispielsweise eines Kaffeegetränkes, wird die Portionskapsel in eine Brühkammer eines Zubereitungsgerätes eingebracht. Nach oder während des Schließvorganges der Brühkammer wird die Kapsel bevorzugt auf ihrer geschlossenen Bodenseite mittels eines in der Brühkammer angeordneten Öffnungsdornes vorzugsweise geöffnet, wobei der Öffnungsdorn vorzugsweise den Randbereich des Kapselbodens öffnet. Nach und/oder bei dem Abdichten der Brühkammer wird vorzugsweise die mit einer Deckelfolie verschlossene Einfüllseite der Portionskapsel mittels mindestens eines Einstechmittels geöffnet. Es gibt aber auch Portionskapseln, die bereits an mindestens einer Seite geöffnet sind, bevor sie in das Zubereitungsgerät eingeführt werden. Anschließend wird eine Zubereitungsflüssigkeit, vorzugsweise heißes Wasser, unter Druck in die Portionskapsel gefördert. Die Zubereitungsflüssigkeit durchströmt das Getränkesubstrat und extrahiert und/oder löst die für die Getränkeherstellung benötigten Stoffe aus dem Getränkesubstrat aus. Für die Zubereitung eines Kaffes reicht bei der erfindungsgemäßen Portionskapsel ein Pumpendruck von ca. 2 Bar oder weniger, um Wasser durch die Portionskapsel zu fördern.

Gemäß einem weiteren oder bevorzugten Gegenstand der vorliegenden Erfindung ist im Bereich des Kapselbodens ein Abstandhalter vorgesehen, der das Filterelement vom Kapselboden und/oder der Seitenwand des Kapselkörpers beabstandet.

Die zu diesem Gegenstand der vorliegenden Erfindung gemachten Ausführungen gelten für die anderen Gegenstände der vorliegenden Erfindung gleichermaßen und umgekehrt.

Der Abstandhalter ist vorzugsweise ein zylindrischer und/oder konischer und/oder kreisringförmiger Hohlkörper, dessen Seitenwände vorzugsweise durchbrochen sind. Vorzugsweise stellt der Abstandshalter für das fertiggestellte Getränk keinen oder nur einen sehr geringen Strömungswiderstand dar. Der Abstandhalter verhindert beispielsweise, dass ein Aufstechorgan das Filterelement verletzt. Der Zentralbereich des Filterelementes wird beispielsweise in dem Kreisring aufgenommen und somit zumindest abschnittsweise vom Kapselrand beabstandet. Alternativ oder zusätzlich liegt das Filterelement beispielsweise auf dem Abstandshalter auf, wodurch es von dem Kapselboden beanbstandet wird. Vorzugsweise ist der Abstandshalter aus Kunststoff gefertigt. Der Abstandshalter kann form-, kraft und/oder stoffschlüssig mit dem Kapselboden verbunden sein. Das Filterelement kann form-, kraft und/oder stoffschlüssig mit dem Abstandhalter und/oder mit dem Kapselboden verbunden sein. Für den Fall, dass ein Abstandshalter zum Einsatz kommt, wird vorzugsweise auf eine Spannung der Seitenwand des Filterelementes verzichtet. Der Abstandhalter wird vorzugsweise zwischen dem Filterelement und dem Kapselkörper vorgesehen.

Noch ein weiterer Gegenstand der vorliegenden Erfindung ist eine Portionskapsel zur Herstellung eines Getränks aufweisend einen Kapselkörper mit einem Kapselboden, einer Seitenwand und einem Kragenrand sowie einem Deckel, wobei zwischen dem Kapselboden und dem Deckel ein Hohlraum zur Aufnahme eines pulverförmigen, granulatförmigen oder flüssigen Getränkesubstrats ausgebildet ist und wobei in dem Hohlraum ein Filterelement angeordnet ist und das Filterelement aus nicht gewebtem Fasermaterial gefertigt ist, wobei in dem Hohlraum ein Element, insbesondere ein Ringelement, vorgesehen ist, das einen Randberiech des Filterelements form-, kraft-, und/oder reibschlüssig mit der Seitenwand des Kapselkörpers verbindet. Der Form- und/oder Kraftschluss erfolgt vorzugsweise durch eine Nut/Feder-Verbindung, wobei sich besonders bevorzugt die Nut in der Seitenwand des Kapselkörpers und die Feder in dem Element, insbesondere in dem Ringelement befindet. Der Fachmann versteht, dass aber auch das Element die Nut aufweisen kann. Der Reibschluss kann zwischen dem Element und der Seitenwand des Kapselkörpers oder zwischen dem Filterelement und der Seitenwand des Kapselkörper erfolgen, wobei im letzteren Fall vorzugsweise das Element das Filterelement gegen den Kapselkörper spannt. Vorzugsweise ist das Element als kegelstumpfförmiger Ring gestaltet. Das Filterelement ist dem Ringelement vorzugsweise stoffschlüssig verbunden. Das Ringelement kann aber auch in einer Tasche des Filterelementes vorgesehen sein. Das Element wird vorzugsweise innerhalb des Filterelementes auf der dem Produkt zugewandten Seite angeordnet. Vorzugsweise stellt die Verbindung zwischen dem Ringelement und der Seitenwand des Kapselkörpers eine Dichtung dar, die verhindert, dass beim Aufbrühen Flüssigkeit an dem Filterelement vorbei fließt. Diese Dichtwirkung kann durch den Wasserdruck noch verbessert werden, indem der Wasserdruck den Ring parallel zu der Seitenwand des Kapselkörpers verschiebt.

Die zu diesem Gegenstand der vorliegenden Erfindung gemachten Ausführungen gelten für die anderen Gegenstände der vorliegenden Erfindung gleichermaßen und umgekehrt.

Bei dieser Ausführungsform der Portionskapsel, ist der Zentralbereich des Filterelements vorzugsweise mit dem Kapselboden verbunden. Diese erfolgt besonders bevorzugt durch eine Siegelung des Filterelements an den Kapselboden.

Weiterhin bevorzugt wird auch bei dieser Ausführungsform die Seitenwand des Filterelements gespannt ist. Vorzugsweise wird durch die Spannung der Form- Kraft- und/oder Reibschluss zwischen dem Ringelement und der Seitenwand des Kapselkörpers verbessert.

Vorzugsweise ist ein Bestandteil des Filterelements Papier und/oder ein natürlich vorkommendes Material und/oder ein biologisch abbaubarer Kunststoff und/oder ein Kunststoff aus einem nachwachsenden Rohstoff.

Vorzugsweise ist das Filterelement elastisch ausgebildet. Dadurch kann die Seitenwand des Filterelements gespannt werden und wirkt wie eine Feder. Dadurch wird eine Formveränderung des Filterelements unter dem Druck der Flüssigkeit zumindest vermindert.

Gemäß einer bevorzugten Ausführungsform der vorliegenden Erfindung ist das Filterelement aus einem ebenen Material geformt. Dieses Formen erfolgt insbesondere unter Druck und/oder Temperatureinfluss.

Vorzugsweise ist an das Filterelement eine Deckelfolie gesiegelt. Diese Ausführungsform spielt insbesondere bei der Ausführungsform eine Rolle, bei der Rand des Filterelements an dem Kragenrand des Kapselkörpers befestigt ist.

Vorzugsweise ist das Filterelement so geformt und/oder so an dem Kapselkörper befestigt, dass bei einer Perforation des Kapselbodens durch ein äußeres Perforationsmittel das Filterelement unperforiert bleibt.

Vorzugsweise ist das Filterelement an den Kapselboden gesiegelt, wobei die Siegelnaht vorzugsweise kreis- oder kreisringförmig vorgesehen ist. Vorzugsweise beträgt der mittlere Durchmesser des Kreisrings oder der Außendurchmesser 5 - 36% des Kreises, jeweils bezogen auf den größten Außendurchmesser des Kapselkörpers und/oder die Breite der Siegelnaht 0,5 - 2 mm.

Vorzugsweise beträgt die Filterfläche zwischen 1100 und 4300 mm², besonders bevorzugt zwischen 1500 und 1900 mm²
Der Kapselkörper ist bevorzugt kegelstumpfförmig oder zylindrisch geformt und wird beispielsweise aus Kunststoff, einem Naturstoff und/oder einem biologisch abbaubaren Werkstoff und/oder einem metallischen Werkstoff, aus einer tiefgezogenen Kunststofffolie oder im Kunststoffspritzverfahren hergestellt. Das Material aus dem der Kapselkörper hergestellt ist, kann mehrlagig vorgesehen sein. Der Kapselkörper weist vorzugsweise oder erfindungsgemäß auf der Einfüllseite einen Kragenrand auf, auf den direkt oder indirekt eine Deckelfolie aufgesiegelt oder aufgeklebt ist. Alternativ ist denkbar, dass der Kapselkörper und ein Kapseldeckel mittels eines mechanischen Verfahrens miteinander verbunden sind. Der Boden der Portionskapsel ist vorzugsweise geschlossen und wird vorzugsweise erst in der Brühkammer mittels eines von außen auf den Portionskapselboden wirkenden Perforationsmittels zur Erzeugung einer Auslauföffnung perforiert. Alternativ wäre aber ebenso denkbar, dass der Boden der Portionskapsel bereits werksseitig mit einer Auslauföffnung versehen ist, welche mittels einer Dichtfolie vorzugsweise verschlossen ist. Die Dichtfolie ist dann beispielsweise mittels des Perforationsmittels perforierbar oder von Hand vom Kapselboden abziehbar. Das Filterelement ist vorzugsweise reißfest ausgebildet. Bei der Dichtfolie handelt es sich vorzugsweise um eine Kunststofffolie, die mindestens eine Barriereschicht, beispielsweise eine Metallschicht, insbesondere eine Aluminium-Schicht oder eine Aluminiumoxid-Schicht aufweist. Alternativ kann als Dichtfolie eine reine Kunststofffolie mit einer Barriereschicht für den Aromastoff des herzustellenden Getränks zum Einsatz kommen. Die Kunststofffolie weist vorzugsweise auf ihrer der Kapsel zugewandten Seite eine "Peel-Schicht" auf, um die Kunststofffolie vergleichsweise leicht von dem Kapselboden lösen zu können.

Die Auslauföffnung ist vorzugsweise so groß vorgesehen, dass sie ein gegebenenfalls vorhandenes Perforationsmittel berührungsfrei aufnehmen kann. Besonders bevorzugt ist die Auslauföffnung so groß vorgesehen, dass an ihr, beim Ausströmen des fertiggestellten Getränkes kein nennenswerter Druckverlust entsteht, insbesondere dass es zu keiner nennenswerten Verwirbelung des fertiggestellten Getränkes kommt, der zu einem Gaseintrag in das Getränk und damit zur Schaumbildung führen könnte.

Alternativ liegt das Material des Kapselbodens nach dem Aufstechen an dem Aufstechmittel an. Das fertiggestellte Getränk läuft zwischen dem Aufstechmittel und dem Material in die Kapsel. Dabei entsteht ein gezielter Druckverlust und/oder eine gezielte Verwirbelung, die beim Kaffee eine "Crema" erzeugt.

Gemäß einer weiteren erfindungsgemäßen oder bevorzugten Ausführungsform der vorliegenden Erfindung ist vorgesehen, dass das Filterelement an dem Kapselkörper oder an dem Kragenrand befestigt ist, wobei das Filterelement insbesondere durch Siegeln oder Kleben befestigt ist. Vorteilhafterweise wird somit ein Verrutschen des Filterelements in der Portionskapsel verhindert. Des Weiteren wird dadurch verhindert, dass die Flüssigkeit das Filterelement ungewollt umfließt. Diese Befestigung erfolgt vorzugsweise durch Ultraschallschweißen.

Weiterhin bevorzugt kann das Filterelement an die Seitenwand des Kapselkörpers gesiegelt sein. Auch bei dieser Ausführungsform wird die Seitenwand des Filterelements vorzugsweise gespannt.

Ausführungsbeispiele der Erfindung sind in den Figuren dargestellt und in der nachfolgenden Beschreibung näher erläutert. Die Figuren sind lediglich beispielhaft beschrieben und schränken den allgemeinen Erfindungsgedanken nicht ein. Die Beschreibung gilt für alle Gegenstände der vorliegenden Erfindung gleichermaßen.
- **Figur 1**: zeigt einen Längsschnitt durch eine Portionskapsel gemäß dem Stand der Technik, die für die Zubereitung von Espresso eingerichtet ist.
- **Figur 2**: zeigt einen Längsschnitt durch eine in einer geschlossenen Brühkammer liegende Portionskapsel gemäß der Ausführungsform nach Figur 1
- **Figuren 3 - 5**: zeigen jeweils die erfindungsgemäße Portionskapsel.

In den verschiedenen Figuren sind gleiche Teile stets mit den gleichen Bezugszeichen versehen und werden daher in der Regel auch jeweils nur einmal benannt bzw. erwähnt.

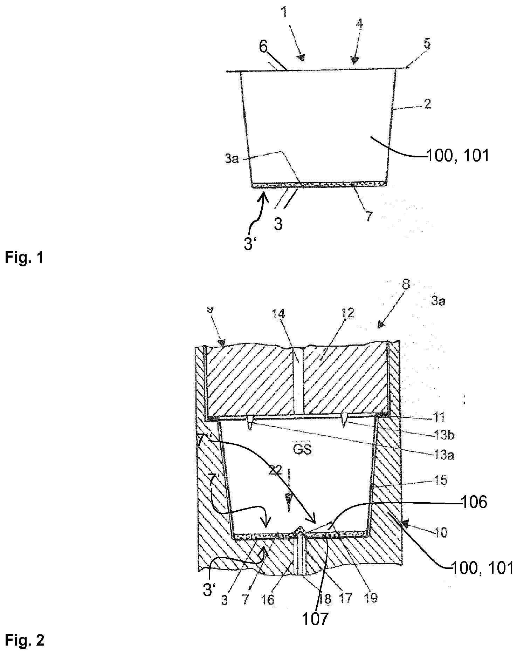

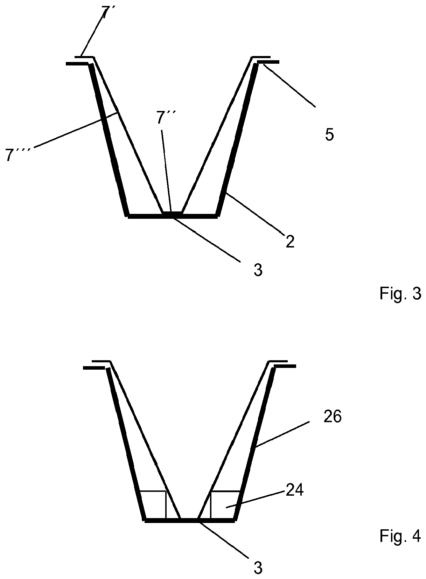

In **Figur 1** ist eine Ausführungsform einer Portionskapsel 1 gemäß dem Stand der Technik dargestellt. Die Portionskapsel 1 umfasst einen kegelstumpfförmigen Kapselkörper 2 mit einem geschlossenen Kapselboden 3 und mit einem an seiner Einfüllseite 4 angeordneten Kragenrand 5, auf den eine Deckelfolie 6 aufgeschweißt oder geklebt ist. Zwischen dem Kapselboden 3 und der Deckelfolie 6 ist somit ein, vorzugsweise luft- und aromadicht verschlossener Hohlraum 100, ausgebildet, welcher mit einer pulver- und/oder granulatförmigen Getränkesubstanz 101 gefüllt ist. Die Getränkesubstanz 101 umfasst dabei beispielsweise ein Kaffee-, Kakao-, Tee- und/oder Milchpulver (bzw. -granulat). Auf der Innenseite 3a des geschlossenen Kapselkörperbodens 3, d.h. innerhalb des Hohlraums 100, ist ein Filterelement 7, bestehend aus einem nicht gewebtem Fasermaterial angeordnet. Bei der erfindungsgemäßen Portionskapsel ist das Filterelement nicht eben und wird anhand der **Figuren 3 - 5** erläutert.

In **Figur 2** ist eine Portionskapsel 1 gemäß der in Figur 1 dargestellt, wobei die Portionskapsel 1 in der Figur 2 in einer geschlossenen Brühkammer 8 angeordnet ist. Die Brühkammer 8 besteht aus einem ersten Brühkammerelement 9 und einem zweiten Brühkammerelement 10, wobei das erste Brühkammerelement 9 zur Einführung der Portionskapsel 1 beweglich gegenüber dem zweiten Brühkammerelement 10 oder umgekehrt vorgesehen ist. Zwischen den beiden Brühkammerelementen 9, 10 ist eine Dichtung 11 angeordnet. Das erste Brühkammerelement 9 besteht im Wesentlichen aus einem Schließkolben 12 mit Einstechelementen 13a, 13b zur Öffnung der Deckelfolie 6 der Portionskapsel 1, einer Zubereitungsflüssigkeitszuführung 14 und der Dichtung 11. Das zweite Brühkammerelement 10 besteht im Wesentlichen aus einer die Portionskapsel 1 teilweise umschließenden Brühkammerglocke 15 mit einem am Boden der Brühkammerglocke 15 angeordneten Öffnungsdorn 16, der mit Ablaufrillen 17 versehen ist, und einem Getränkeablauf 18. Zur Aufnahme der Portionskapsel 1 befindet sich die Brühkammer 8 in einem nicht dargestellten geöffneten Zustand, in welchem das erste und das zweite Brühkammerelement 9, 10 voneinander beabstandet sind, um eine Zuführung der Portionskapsel 1 zu gewährleisten, und dem dargestellten geschlossenen Zustand, in welchem ein Zubereitungsvorgang zur Herstellung eines Getränks mittels der Portionskapsel 1 durchführbar ist. Im geschlossenen Zustand ist die Brühkammer 8 druckdicht verschlossen. Beim Überführen der Brühkammer 8 vom geöffneten Zustand in den abgebildeten geschlossenen Zustand wird die Deckelfolie 6 von den Einstechelementen 13a, 13b durchstochen, so dass Zubereitungsflüssigkeit, insbesondere heißes Brühwasser, durch die Zubereitungsflüssigkeitszuführung 14 unter Druck in den Hohlraum 100 der Portionskapsel 1 gelangt. Ferner wird beim Schließen der Brühkammer 8 der Kapselboden 3 von dem als Öffnungsdorn 16 ausgebildeten Perforationsmittel perforiert, so dass eine Ausgangsöffnung 107 in der Portionskapsel 1 erzeugt wird, durch welche die hergestellte Getränkeflüssigkeit aus der Portionskapsel 1 in Richtung des Getränkeablaufs 18 heraustreten kann. Zur Unterstützung der Ableitung der Getränkeflüssigkeit weist der Öffnungsdorn 16 auf seiner Mantelfläche die Ablaufrillen 17 auf. Der Kapselboden 3 weist hier in seinem zentralen Punkt 106, in welchem der Kapselboden 3 von dem Öffnungsdorn 16 perforiert wird, optional eine Sollbruchstelle 104 auf, so dass ein vergleichsweise stumpfer Öffnungsdorn 16 zur Perforation des Kapselbodens 3 ausreichend ist und so die Gefahr, dass versehentlich auch das Filterelement 7 vom Öffnungsdorn 16 perforiert wird, ausgeräumt wird.

**Figuren 3 - 5** zeigen jeweils eine Ausführungsform der erfindungsgemäßen Portionskapsel-Das Filterelement umfasst vorzugsweise ein aus Polyester-Feinfasern hergestellten Vliesstoff, der eine Massenbelegung zwischen 10 und 100 Gramm pro Quadratmeter, bevorzugt zwischen 20 und 40 Gramm pro Quadratmeter und besonders bevorzugt von im Wesentlichen 25 - 35 Gramm pro Quadratmeter aufweist und/oder der eine Dicke zwischen 0,05 und 0,3 Millimetern, bevorzugt zwischen 0,1 und 0,2 Millimetern und besonders bevorzugt von im Wesentlichen 0,12 - 0,16 Millimetern aufweist und/oder der eine Luftdurchlässigkeit bei einem Druck von 100 Pascal zwischen 2500 und 5000 l/(m²s), bevorzugt zwischen 3000 und 4000 (l/m²s) und besonders bevorzugt im Wesentlichen bei 3200 - 3400 l/(m²s) aufweist. Das Filterelement 7 ist aus einem ebenen Material hergestellt, das unter Druck und/oder Temperatureinfluss in eine dreidimensionale Form gebracht worden ist.

Bei der Ausführungsform gemäß **Figur 3** weist das Filterelement einen Randbereich 7' auf, an den sich eine hier konusförmige Seitenwand 7''' anschließt. Mittig weist das Filterelement 7 einen Zentralbereich 7" auf. Der Randbereich 7'ist mit dem Randbereich 5 des Kapselkörpers beispielsweise durch Siegeln verbunden. Dasselbe gilt für den Zentralbereich 7", der mit dem Boden des Kapselkörpers verbunden ist. Erfindungsgemäß ist die Seitenwand 7''' des Filterelements gespannt. Das Filterelement ist in dem vorliegen Fall so geformt, das zwischen dem Boden und dem Filterelement ein Hohlraum entsteht, in den ein Aufstechmittel eindringen kann, ohne dass das Filterelement beschädigt wird. Die erfindungsgemäße Portionskapsel wird beispielsweise hergestellt, indem das Filterelement 7 zunächst mit dem Randbereich 5 des Kapselkörpers verbunden wird. Danach wird der Zentralbereich des Filterelements mit dem Boden 3 der Kapsel verbunden. Dabei wird das Filterelement geformt und/oder gespannt. Sodann wird die Getränkesubstanz in die Portionskapsel eingefüllt und abschließend die Portionskapsel mit einer Deckelfolie verschlossen, die beispielsweise an den Randbereich des Filterelements gesiegelt wird.

**Figur 4** zeigt im Wesentlichen die Ausführungsform gemäß Figur 3, wobei in dem vorliegenden Fall im Bereich des Bodens der Kapselkörpers ein Abstandhalter 24 vorgesehen ist, der das Filterelement von dem Boden und/oder von der Seitenwand 26 des Kapselkörpers beabstandet. Der Abstandhalter ist beispielsweise ein kreisringförmiger Köper, insbesondere ein Hohlkörper. Das Filterelement kann an den Abstandshalter und/oder an den Boden des Kapselkörpers gesiegelt sein.

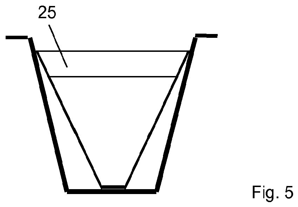

**Figur 5** zeigt noch eine Ausführungsform der erfindungsgemäßen Portionskapsel. In dem vorliegenden Fall ist ein Element 25 vorgesehen, das vorzugsweise ringförmig mit einer kegelstumpfförmigen Seitenwand ausgebildet ist. Das Filterelement 7 ist beispielsweise stoffschlüssig mit dem Element 25 verbunden. Das Element 25 liegt an der Seitenwand des Kapselkörpers an und bildet mit diesem eine form-, kraft-, stoffschlüssige Verbindung aus. Insbesondere ist die Verbindung reibschlüssig. Vorzugsweise ist der Zentralbereich des Filterelementes mit dem Kapselboden verbunden. Die Seitenwände des Filterelements können gespannt sein.

### Bezugszeichenliste

- 1: Portionskapsel
- 2: Kapselkörper
- 3: Kapselboden
- 3a: Kapselboden-Innenseite
- 3': Randbereich des Kapselbodens
- 4: Einfüllseite
- 5: Kragenrand
- 6: Deckel, Deckelfolie
- 7: Filterelement
- 7': Randbereich des Filterelements
- 7": Zentralbereich des Filterelements
- 7''': Seitenwand des Filterelements
- 8: Brühkammer
- 9: Erstes Brühkammerelement
- 10: Zweites Brühkammerelement
- 11: Dichtung
- 12: Schließkolben
- 13a: Einstechelement
- 13b: Einstechelement
- 14: Zubereitungsflüssigkeitszufuhr
- 15: Brühglocke
- 16: Öffnungsdorn
- 17: Auslaufrillen
- 18: Ablauf
- 19: Einstechspitze
- 20: Einbuchtung
- 21: Ein-/Ausbuchtung
- 22: Zubereitungsflüssigkeitsfluss
- 23: Brühglockenboden
- 24: Abstandshalter
- 25: Spannelement
- 26: Seitenwand des Kapselkörpers
- 100: Hohlraum
- 101: Getränkesubstrat
- 106: Zentraler Punkt
- 107: Öffnung, Ausgangsöffnung

## Patentansprüche

1. Portionskapsel (1) zur Herstellung eines Getränks aufweisend einen Kapselkörper (2) mit einem Kapselboden (3), einer Seitenwand (26) und einem Kragenrand (5) sowie einem Deckel (6), wobei zwischen dem Kapselboden (3) und dem Deckel (6) ein Hohlraum (100) zur Aufnahme eines pulverförmigen Granulat-förmigen oder flüssigen Getränkesubstrats (101) ausgebildet ist und wobei in dem Hohlraum ein Filterelement (7) angeordnet ist und das Filterelement aus nicht gewebtem Fasermaterial gefertigt ist, **dadurch gekennzeichnet, dass** das Filterelement (7) einen Randbereich (7') aufweist, der an dem Kragenrand (5) des Kapselkörpers (2) befestigt ist und einen Zentralbereich (7") aufweist, der an dem Kapselboden (3) befestigt ist, wobei die Seitenwand (7‴) des Filterelements gespannt ist.

2. Portionskapsel (1) nach Anspruch 1 oder dem Oberbegriff von Patentanspruch 1, **dadurch gekennzeichnet, dass** im Bereich des Kapselbodens (3) ein Abstandhalter (24) vorgesehen ist, der das Filterelement vom Kapselboden (3) und/oder der Seitenwand (26) des Kapselkörpers beabstandet.

3. Portionskapsel nach Anspruch 1, **dadurch gekennzeichnet, dass** im Hohlraum ein Element (25), insbesondere ein Ringelement, vorgesehen ist, das einen Randbereich des Filterelements form-, kraft-, und/oder reibschlüssig mit der Seitenwand (26) des Kapselkörpers verbindet.

4. Portionskapsel nach Anspruch 3, **dadurch gekennzeichnet, dass** der Zentralbereich (7") des Filterelements (7) mit dem Kapselboden (3) verbunden ist.

5. Portionskapsel nach einem der Ansprüche 3 oder 4, **dadurch gekennzeichnet, dass** die Seitenwand (7‴) des Filterelements gespannt ist.

6. Portionskapsel nach einem der voranstehenden Ansprüche, **dadurch gekennzeichnet, dass** ein Bestandteil des Filterelements Papier ist.

7. Portionskapsel nach einem der voranstehenden Ansprüche, **dadurch gekennzeichnet, dass** das Filterelement ein Vlies ist und/oder eine Filzstruktur aufweist.

8. Portionskapsel (1) nach Anspruch 7, **dadurch gekennzeichnet, dass** das Vlies einen aus Polyester-Feinfasern hergestellten Vliesstoff umfasst und/oder dass das Vlies eine Massenbelegung zwischen 10 und 100 Gramm pro Quadratmeter, bevorzugt zwischen 20 und 40 Gramm pro Quadratmeter und besonders bevorzugt von im Wesentlichen 25 - 35 Gramm pro Quadratmeter aufweist und/oder dass das Vlies eine Dicke zwischen 0,05 und 0,3 Millimetern, bevorzugt zwischen 0,1 und 0,2 Millimetern und besonders bevorzugt von im Wesentlichen 0,12 - 0,16 Millimetern aufweist und/oder dass das Vlies eine Luftdurchlässigkeit bei einem Druck von 100 Pascal zwischen 2500 und 5000 l/(m 2s), bevorzugt zwischen 3000 und 4000 (l/m 2s) und besonders bevorzugt im Wesentlichen bei 3200 - 3400 l/(m 2s) aufweist.

9. Portionskapsel nach einem der voranstehenden Ansprüche, **dadurch gekennzeichnet, dass** das Filterelement zumindest teilweise aus einem biologisch abbaubaren Kunststoff vorgesehen ist.

10. Portionskapsel (1) nach einem der vorhergehenden Ansprüche, **dadurch gekennzeichnet, dass** das Filterelement (7) elastisch ausgebildet ist.

11. Portionskapsel nach einem der voranstehenden Ansprüche, **dadurch gekennzeichnet, dass** das Filterelement aus einem ebenen Material geformt ist.

12. Portionskapsel (1) nach einem der vorhergehenden Ansprüche, **dadurch gekennzeichnet, dass** an das Filterelement (7) eine Deckelfolie (6) gesiegelt ist.

13. Portionskapsel (1) nach einem der vorhergehenden Ansprüche, **dadurch gekennzeichnet, dass** der Kapselboden (3) derart ausgebildet ist, dass bei einer Perforation des Kapselbodens (3) durch ein äußeres Perforationsmittel (16) das Filterelement (7) unperforiert bleibt.

14. Portionskapsel nach einem der voranstehenden Ansprüche, **dadurch gekennzeichnet, dass** das Filterelement an den Kapselboden gesiegelt ist, wobei die Siegelnaht vorzugsweise kreisringförmig vorgesehen ist.

15. Portionskapsel nach Anspruch 14, **dadurch gekennzeichnet, dass** der mittlere Durchmesser des Kreisrings 3 - 18 mm und/oder die Breite der Siegelnaht 0,5 - 2 mm beträgt.

16. Verwendung einer Portionskapsel (1) nach einem der Ansprüche 1 bis 15 zur Herstellung eines Getränks, vorzugsweise zur Herstellung eines Kaffee-, Kakao-, Tee- und/oder Milchgetränks.

## Claims

1. Portion capsule (1) for producing a beverage having a capsule body (2) with a capsule bottom (3), a side wall (26) and a collar edge (5) and a lid (6), a cavity (100) for receiving a pulverulent granular or liquid beverage substrate (101) being configured between the capsule bottom (3) and the lid (6), and a filter element (7) being arranged in the cavity, and the filter element being produced from nonwoven fiber material, **characterized in that** the filter element (7) has an edge region (7') which is fastened to the collar edge (5) of the capsule body (2) and has a central region (7") which is fastened to the capsule bottom (3), the side wall (7‴) of the filter element being stretched.

2. Portion capsule (1) according to Claim 1 or the preamble of Patent Claim 1, **characterized in that** a spacer element (24) is provided in the region of the capsule bottom (3), which spacer element (25) spaces the filter element apart from the capsule bottom (3) and/or the side wall (26) of the capsule body.

3. Portion capsule according to Claim 1, **characterized in that** an element (25), in particular an annular element, is provided in the cavity, which element (25) connects an edge region of the filter element to the side wall (26) of the capsule body in a positively locking, non-positive and/or frictionally locking manner.

4. Portion capsule according to Claim 3, **characterized in that** the central region (7") of the filter element (7) is connected to the capsule bottom (3) .

5. Portion capsule according to either of Claims 3 and 4, **characterized in that** the side wall (7‴) of the filter element is stretched.

6. Portion capsule according to one of the preceding claims, **characterized in that** one constituent part of the filter element is paper.

7. Portion capsule according to one of the preceding claims, **characterized in that** the filter element is a nonwoven and/or has a felt structure.

8. Portion capsule (1) according to Claim 7, **characterized in that** the nonwoven comprises a nonwoven fabric which is produced from fine polyester fibers, and/or **in that** the nonwoven has a mass distribution between 10 and 100 g/m², preferably between 20 and 40 g/m² and particularly preferably of substantially 25-35 g/m², and/or **in that** the nonwoven has a thickness between 0.05 and 0.3 millimeter, preferably between 0.1 and 0.2 millimeter and particularly preferably of substantially 0.12-0.16 millimeter, and/or **in that** the nonwoven has an air permeability at a pressure of 100 Pascal of between 2500 and 5000 l/(m²s), preferably of between 3000 and 4000 l/(m²s) and particularly preferably of substantially 3200-3400 l/(m²s).

9. Portion capsule according to one of the preceding claims, **characterized in that** the filter element is provided at least partially from a biologically degradable plastic.

10. Portion capsule (1) according to one of the preceding claims, **characterized in that** the filter element (7) is of elastic configuration.

11. Portion capsule according to one of the preceding claims, **characterized in that** the filter element is formed from a flat material.

12. Portion capsule (1) according to one of the preceding claims, **characterized in that** a lid film (6) is sealed onto the filter element (7).

13. Portion capsule (1) according to one of the preceding claims, **characterized in that** the capsule bottom (3) is configured in such a way that the filter element (7) remains unperforated when the capsule bottom (3) is perforated by way of an outer perforation means (16).

14. Portion capsule according to one of the preceding claims, **characterized in that** the filter element is sealed onto the capsule bottom, the sealing seam preferably being provided in a circularly annular manner.

15. Portion capsule according to Claim 14, **characterized in that** the mean diameter of the circular ring is 3-18 mm and/or the width of the sealing seam is 0.5-2 mm.

16. Use of a portion capsule (1) according to one of Claims 1 to 15 for producing a beverage, preferably for producing a coffee, cocoa, tea and/or milk beverage.

## Revendications

1. Capsule-portion (1) pour préparer une boisson, présentant un corps de capsule (2) avec un fond de capsule (3), une paroi latérale (26) et un bord de collerette (5) ainsi qu'un couvercle (6), une cavité (100) pour recevoir un substrat de boissons (101) liquide, en poudre ou en granulés étant réalisée entre le fond de capsule (3) et le couvercle (6) et un élément de filtre (7) étant disposé dans la cavité, et l'élément de filtre étant fabriqué en matériau fibreux non-tissé, **caractérisée en ce que** l'élément de filtre (7) présente une région de bord (7') qui est fixée au bord de collerette (5) du corps de capsule (2) et qui présente une région centrale (7") qui est fixée au fond de capsule (3), la paroi latérale (7‴) de l'élément de filtre étant serrée.

2. Capsule-portion (1) selon la revendication 1 ou selon le préambule de la revendication 1, **caractérisée en ce qu'**un élément d'espacement (24) est prévu dans la région du fond de capsule (3), lequel espace l'élément de filtre du fond de capsule (3) et/ou de la paroi latérale (26) du corps de capsule.

3. Capsule-portion selon la revendication 1, **caractérisée en ce qu'**un élément (25), en particulier un élément annulaire, est prévu dans la cavité, lequel relie une région de bord de l'élément de filtre par engagement par correspondance de formes, par force et/ou par friction à la paroi latérale (26) du corps de capsule.

4. Capsule-portion selon la revendication 3, **caractérisée en ce que** la région centrale (7'') de l'élément de filtre (7) est connectée au fond de capsule (3).

5. Capsule-portion selon l'une quelconque des revendications 3 ou 4, **caractérisée en ce que** la paroi latérale (7‴) de l'élément de filtre est serrée.

6. Capsule-portion selon l'une quelconque des revendications précédentes, **caractérisée en ce qu'**un constituant de l'élément de filtre est du papier.

7. Capsule-portion selon l'une quelconque des revendications précédentes, **caractérisée en ce que** l'élément de filtre est un non-tissé et/ou est une structure de feutre.

8. Capsule-portion (1) selon la revendication 7, **caractérisée en ce que** le non-tissé comprend un matériau non-tissé fabriqué à partir de fibres fines de polyester et/ou **en ce que** le non-tissé présente une densité surfacique comprise entre 10 et 100 grammes par mètre carré, de préférence comprise entre 20 et 40 grammes par mètre carré et particulièrement préférablement essentiellement de 25 à 35 grammes par mètre carré et/ou **en ce que** le non-tissé présente une épaisseur comprise entre 0,05 et 0,3 millimètres, de préférence entre 0,1 et 0,2 millimètres et particulièrement préférablement essentiellement de 0,12 à 0,16 millimètres et/ou **en ce que** le non-tissé présente une perméabilité à l'air à une pression de 100 Pascal comprise entre 2500 et 5000 l/(m²s), de préférence entre 3000 et 4000 l/(m²s), et particulièrement préférablement essentiellement de 3200 à 3400 l/(m²s).

9. Capsule-portion selon l'une quelconque des revendications précédentes, **caractérisée en ce que** l'élément de filtre est prévu au moins en partie en un plastique biodégradable.

10. Capsule-portion (1) selon l'une quelconque des revendications précédentes, **caractérisée en ce que** l'élément de filtre (7) est réalisé sous forme élastique.

11. Capsule-portion selon l'une quelconque des revendications précédentes, **caractérisée en ce que** l'élément de filtre est formé d'un matériau plan.

12. Capsule-portion (1) selon l'une quelconque des revendications précédentes, **caractérisée en ce qu'**un film de recouvrement (6) est scellé sur l'élément de filtre (7).

13. Capsule-portion (1) selon l'une quelconque des revendications précédentes, **caractérisée en ce que** le fond de capsule (3) est réalisé de telle sorte que dans le cas d'une perforation du fond de capsule (3) par un moyen de perforation extérieur (16), l'élément de filtre (7) ne soit pas perforé.

14. Capsule-portion selon l'une quelconque des revendications précédentes, **caractérisée en ce que** l'élément de filtre est scellé sur le fond de capsule, le joint de scellage étant de préférence prévu sous forme annulaire circulaire.

15. Capsule-portion selon la revendication 14, **caractérisée en ce que** le diamètre moyen de l'anneau circulaire est de 3 à 18 mm et/ou la largeur du joint de scellage est de 0,5 à 2 mm.

16. Utilisation d'une capsule-portion (1) selon l'une quelconque des revendications 1 à 15 pour préparer une boisson, de préférence pour préparer une boisson à base de café, de cacao, de thé et/ou de lait.
